# FASCICULE DE BREVET EUROPEEN

(11) **EP 3 298 893 B1**
(45) Date de publication et mention de la délivrance du brevet: **07.04.2021**
(21) Numéro de dépôt: 17192680.1
(22) Date de dépôt: 22.09.2017
(51) Int. Cl.: A01M 29/30

(54) **PROCEDE DE LUTTE CONTRE DES RONGEURS**
VERFAHREN ZUR BEKÄMPFUNG VON NAGETIEREN
RODENT CONTROL METHOD

(30) Priorité: 23.09.2016 FR 1658962
(43) Date de publication de la demande: 28.03.2018
(73) Titulaire: Berkem Developpement, 33290 Blanquefort (FR)
(72) Inventeur: MESSAOUDI, Daouïa, 69800 SAINT-PRIEST (FR); FAHY, Olivier, 33000 BORDEAUX (FR)
(74) Mandataire: Plasseraud IP

(56) Documents cités:
- EP-A1- 3 009 263
- EP-A2- 2 286 658
- WO-A1-2013/061264
- CN-U- 204 130 242
- US-A1- 2006 057 172
- Redaktion Waldwissen.Net - Fva: "Sturmholz in Folie lagern | waldwissen.net", , 29 février 2012 (2012-02-29), XP055379074, Extrait de l'Internet: URL:http://www.waldwissen.net/waldwirtscha ft/holz/lagerung/fva_folienlagerung/index_ DE [extrait le 2017-06-07]

## Description

### ARRIERE-PLAN DE L'INVENTION

### Domaine de l'invention

La présente invention concerne un procédé de lutte contre des rongeurs nuisibles, tels que des rats, des souris, des campagnols, ...

Elle concerne également une feuille souple pour la mise en œuvre de ce procédé de lutte.

### Arrière-plan technologique

Il est connu que des rongeurs nuisibles tels que les rats ou les souris, peuvent générer des dégâts importants et être vecteurs de certaines maladies transmissibles à l'homme et aux animaux domestiques.

Ces rongeurs peuvent ainsi occasionner des déprédations matérielles au niveau des fondements de maisons et d'immeubles, au niveau des sols, des murs et autres parois.

Ils s'attaquent également aux installations électriques, canalisations et gaines et peuvent dès lors occasionner des courts-circuits susceptibles de générer des accidents plus ou moins graves ou encore de créer des fuites, telles que des fuites de gaz, voir par exemple le document CN204130242U. Le document WO2013061264 montre un film de protection à couches multiples réalisés dans un matière plastique et destiné à couvrir et envelopper des produits naturels.

C'est pourquoi, différents systèmes de lutte ont été développés pour protéger les bâtiments ou les cultures contre ces nuisibles.

On connaît ainsi des moyens chimiques, notamment des produits répulsifs ou rodenticides.

Les molécules mises en œuvre pour limiter les populations sont efficaces mais elles présentent un certain nombre d'inconvénients.

Tout d'abord, elles sont peu spécifiques si elles ne sont pas utilisées par des opérateurs qualifiés.

Par ailleurs, des appâts rodenticides sont susceptibles d'être consommés par des animaux autres que des rongeurs nuisibles. A titre illustratif, ils peuvent être consommés par des animaux domestiques tels que des chiens ou chats.

En outre, en s'accumulant dans les carcasses de rongeurs, ils peuvent aller toucher d'autres espèces notamment prédatrices de ces rongeurs.

Ainsi de nouvelles pratiques de lutte contre les nuisibles, plus respectueuses de l'environnement, sont recherchées.

L'objectif de ces méthodes de lutte est de repousser les rongeurs temporairement ou définitivement sans occasionner la mort de ces derniers.

De telles méthodes de lutte peuvent permettre de chasser les rongeurs vers des zones dans lesquelles l'emploi de rodenticides, notamment pour des raisons d'efficacité sur des populations importantes, présente moins de risque pour l'environnement.

On connaît ainsi des dispositifs répulsifs à ultrasons ou encore des pièges mécaniques tels que des nasses.

Toutefois, ces dispositifs répulsifs de l'état de l'art restent complexes à mettre en œuvre, coûteux et/ou peu efficaces.

### Objet de l'invention

La présente invention vise à pallier les inconvénients de l'art antérieur et à répondre aux contraintes ci-dessus énoncées en proposant un procédé de lutte contre des rongeurs nuisibles, simple dans sa conception et dans son mode opératoire, économique et exerçant un effet répulsif sur les rongeurs pour les éloigner d'une habitation ou d'un champ cultivé.

Un autre objet de la présente invention est un tel procédé qui soit modulable pour le rendre spécifique à une population de rongeurs cibles.

La présente invention vise également une feuille souple pour la mise en œuvre de ce procédé de lutte contre des rongeurs.

### BREVE DESCRIPTION DE L'INVENTION

A cet effet, l'invention concerne un procédé de lutte contre des rongeurs comprenant le recouvrement d'une surface avec au moins une feuille susceptible d'empêcher l'intrusion desdits rougeurs afin de protéger une zone ou un objet sensible, ladite au moins une feuille étant en un matériau polymère opaque et présentant une épaisseur supérieure ou égale à 50 µm, et encore mieux à 150 µm. La demanderesse a constaté de manière surprenante que l'opacité et l'étanchéité de la feuille participaient à l'effet répulsif occasionné par cette feuille sur les rongeurs. En particulier, l'opacité de la feuille empêche un rongeur de distinguer, ou de deviner, des formes placées derrière cette feuille, lesquelles pourraient l'inciter à percer celle-ci.

Dans différents modes de réalisation particuliers de ce procédé, chacun ayant ses avantages particuliers et susceptibles de nombreuses combinaisons techniques possibles:
- ladite feuille contient un extrait issu de Piper nigrum.
Le Piper nigrum appartient à la famille des Pipéracées. Ses fruits aussi appelés baies, sont essentiellement utilisés en alimentaire comme épice.
On entend par l'expression « extrait issu de Piper nigrum », tout extrait aqueux, hydroglycolique ou hydrolysat obtenu à partir de Piper nigrum. De manière avantageuse, on cherchera à utiliser un extrait issu de baies de Piper nigrum. Il peut s'agir de poivre noir, de poivre blanc, de poivre vert ou encore de poivre de Cayenne (Capiscum annuum).
La demanderesse a constaté que l'extrait de Piper nigrum ainsi ajouté dans la masse de la feuille lors de sa fabrication présentait avantageusement un effet répulsif sur les rongeurs en raison de son pouvoir allergisant.
De préférence, cette feuille comporte une proportion massique d'extrait issu de Piper nigrum inférieure à 1 ppm.
- on réalise une lutte sélective en adaptant l'épaisseur de ladite au moins une feuille en fonction d'une population de rongeurs cibles nuisibles, l'épaisseur de ladite au moins une feuille étant supérieure pour une population de gros rongeurs tels que des rats par rapport à une population de petits rongeurs tels que des souris.
De manière surprenante, la demanderesse a constaté que la superposition de plusieurs feuilles de moindre épaisseur en remplacement d'une unique feuille ayant l'épaisseur souhaitée ne permettait pas d'atteindre le résultat obtenu avec cette seule feuille. On constate en effet que les rongeurs attaquent très rapidement les feuilles de moindre épaisseur traversant ainsi les différentes couches superposées alors qu'en comparaison, la feuille unique ayant l'épaisseur souhaitée n'est pas attaquée ou beaucoup plus tardivement.
- ladite au moins une feuille est choisie de sorte qu'elle est étanche à la vapeur d'eau.
Par « étanche à la vapeur d'eau », on entend des feuilles présentant selon la norme NBN EN 1931 de Octobre 2000 (Feuilles souples d'étanchéité, feuilles d'étanchéité de toiture bitumineuses, plastiques et élastomères - détermination des propriétés de transmission de la vapeur d'eau), un facteur de résistance à la vapeur d'eau µ (sans unité) supérieur à 195 000, et de préférence au moins égal à 275 000.
De manière avantageuse, une telle étanchéité à la vapeur d'eau assure également une limitation de la migration des odeurs, laquelle serait autrement susceptible de déclencher une attaque de la feuille par un rongeur nuisible
- on choisit ladite au moins une feuille, d'une couleur opaque susceptible d'induire un stress, ou encore de générer une anxiété, chez lesdits rongeurs.
De préférence, cette couleur opaque est verte ou bleue. Il a été en effet constaté de manière surprenante que ces couleurs exerçaient une répulsion chez les rongeurs par rapport à d'autres couleurs n'ayant aucun effet sur ces rongeurs nuisibles.
- on choisit cette feuille de sorte qu'elle est pleine, c'est-à-dire non perforée pour ne pas permettre notamment le passage d'odeurs,
- l'épaisseur de ladite feuille est prise, ou choisie, entre 150 µm et 300 µm,
- ladite au moins une feuille est une feuille opaque en polyoléfine et encore mieux, une feuille opaque en polyéthylène.
A titre d'exemple, cette feuille est réalisée en polyéthylène basse densité (PEBD).
- on recouvre une zone de sol pour protéger des fondations et/ou on recouvre la surface externe d'au moins un objet tel qu'une canalisation, une palette, un mobilier, ... avec ladite au moins une feuille pour protéger cet objet ou son contenu. De préférence, cette feuille est étendue sur la totalité de la surface constructible découverte par les travaux de terrassement, y compris les fondations, un vide sanitaire, avant construction d'un bâtiment.
Elle peut de plus dépasser hors du sol de manière à s'assurer qu'elle recouvre bien la totalité de la surface constructible mise à nue par le terrassement.
- ladite au moins une feuille étant étirable élastiquement, on étire ladite au moins une feuille lors de sa mise en place.
- ladite feuille comporte également un insecticide et/ou un fongicide.
De manière avantageuse, cet insecticide est un pyréthrinoïde, de préférence le pyréthrinoïde est choisi parmi un ou plusieurs de la bifenthrine, de la zetacyperméthrine, de l'alpha-cyperméthrine, de la tétra-méthrine, de la lambdacyhalothrine, du fenvalérate, de la cyfluthrine, de la bio-resméthrine, de la perméthrine et de la delta-méthrine.
De préférence, ladite feuille contient de 0,1 à 2% en poids de pyréthrinoïde, et de préférence 1% en poids de pyréthrinoïde.
Par "pyréthrinoïde" on entend selon l'invention, sauf indication contraire, aussi bien le pyrèthre naturel que les pyréthrinoïdes de synthèse, la perméthrine en particulier.

La présente invention concerne également une feuille formant une barrière anti-intrusion pour la mise en œuvre du procédé tel que décrit précédemment.

Selon l'invention, cette feuille est en un matériau polymère opaque et présente une épaisseur au moins égale à 50 µm, et encore mieux à 150 µm.

Dans différents modes de réalisation particuliers de cette feuille, chacun ayant ses avantages particuliers et susceptibles de nombreuses combinaisons techniques possibles:
- l'épaisseur de ladite feuille est comprise entre 150 µm et 300 µm,
- cette feuille comporte un extrait issu de Piper nigrum.
De préférence, cette feuille comporte une proportion massique d'extrait issu de Piper nigrum inférieure à 1 ppm.
Cet extrait de Piper nigrum qui peut être du poivre blanc ou noir par exemple, est introduit dans la masse.
- cette feuille présente une couleur opaque susceptible d'induire un stress, ou encore de générer une anxiété, chez lesdits rongeurs.
De préférence, cette couleur opaque est verte ou bleue.
- cette feuille est une feuille opaque en polyoléfine et encore mieux, une feuille opaque en polyéthylène.
A titre d'exemple, cette feuille est réalisée en polyéthylène basse densité (PEBD).
- cette feuille, ou au moins sa couche externe, comporte également au moins un absorbeur d'ultraviolet (UV).
Ces actifs absorbeurs d'ultraviolet sont choisis parmi le noir de carbone, les salicylates, benzoates de phényle et benzophénones par exemple
- cette feuille est étanche à la vapeur d'eau,
- cette feuille comporte un insecticide et/ou un fongicide.
De manière avantageuse, cet insecticide est un pyréthrinoïde, de préférence le pyréthrinoïde est choisi parmi un ou plusieurs de la bifenthrine, de la zetacyperméthrine, de l'alpha-cyperméthrine, de la tétra-méthrine, de la lambdacyhalothrine, du fenvalérate, de la cyfluthrine, de la bio-resméthrine, de la perméthrine et de la delta-méthrine
De préférence, ladite feuille contient de 0,1 à 2% en poids de pyréthrinoïde, et de préférence 1% en poids de pyréthrinoïde.
Une telle feuille présente ainsi avantageusement un effet multi-cibles pour protéger une habitation ou une culture.
- cette feuille est une feuille étirable élastiquement et repositionnable,
- cette feuille comporte sur sa surface externe une couche d'adhésif repositionnable, constituée d'une composition adhésive thermofusible.
De préférence, il s'agit d'un adhésif thermofusible à tack permanent à base de caoutchouc synthétique ou d'EVA (Ethylène - acétate de vinyle). Il peut présenter une épaisseur comprise entre 5 et 50 g/m², de manière préférentielle, de 30 g/m². La surface externe de la feuille peut être enduite à chaud.
Cette couche d'adhésif repositionnable permet avantageusement de s'assurer d'un déploiement de ladite feuille sans formation de pli.
- cette feuille est pleine, c'est-à-dire non perforée afin de ne pas permettre notamment le passage d'odeurs.

### BREVE DESCRIPTION DES DESSINS

D'autres avantages, buts et caractéristiques particulières de la présente invention ressortiront de la description qui va suivre, faite, dans un but explicatif et nullement limitatif, en regard du seul dessin annexé représentant schématiquement une palette entourée d'un film pour assurer la protection de son contenu contre des rongeurs nuisibles, tels que des souris, selon un mode de réalisation particulier de la présente invention ;

### DESCRIPTION DETAILLEE DE MODE DE REALISATION DE L'INVENTION

Tout d'abord, on note que la figure n'est pas à l'échelle.

La Figure unique montre de manière schématique une palette 10 filmée pour assurer la protection de son contenu contre des rongeurs nuisibles tels que des souris, selon un mode de réalisation particulier de la présente invention.

Il est connu que la profusion de ressources alimentaires dans les grandes surfaces, telles que des supermarchés, attire des rongeurs tels que des souris, qui s'installent dans les palettes stockées en réserve ou bien dans les rayons directement.

Dans ces grandes surfaces, les souris sont en général livrées avec les palettes depuis les centrales d'achat, notamment lors des livraisons de légumes/fruits. Les palettes sont typiquement filmées avec un film étirable tel qu'un cellophane, lequel est facilement transperçable par les souris, soit pour accéder à l'intérieur de la palette, soit pour sortir de la palette avec laquelle elles ont voyagé.

Il existe donc un besoin pressant pour une bâche répulsive empêchant les souris de monter dans une palette de transport de marchandises, et les faisant fuir une fois que la palette est filmée, l'objectif étant que les souris ne fassent pas de dégâts.

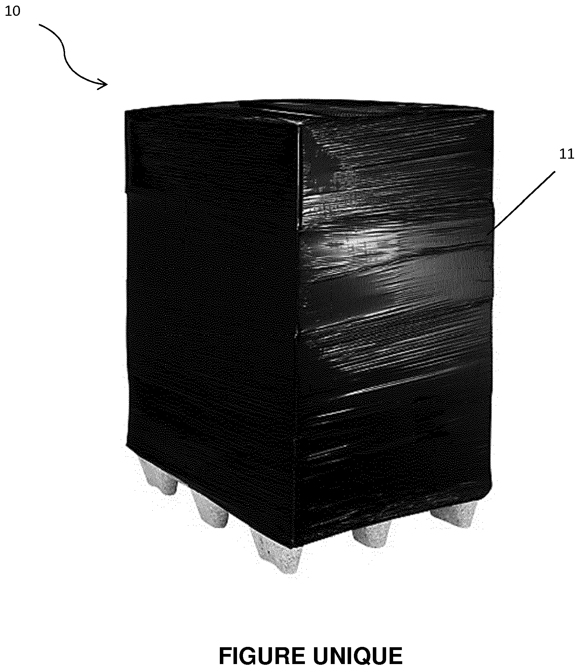

La palette 10 représentée à la Fig. 1, est filmée avec une feuille 11 qui est d'un seul tenant. Livrée en vrac ou en rouleaux, cette feuille 11 assure grâce à sa souplesse un déploiement aisé sur l'élément à protéger.

Elle forme un écran de protection efficace contre les rongeurs nuisibles. Etant étanche et opaque, elle ne laisse pas diffuser d'odeurs et peut servir à protéger des aliments qui autrement entourés avec un film traditionnel, seraient sujet à des attaques de la part des rongeurs.

Cette feuille 11 est ainsi réalisée en un matériau polymère opaque. Elle peut être obtenue à partir d'une résine choisie dans le groupe comprenant le polyéthylène basse densité, le polyéthylène haute densité ou le polypropylène.

Elle présente avantageusement une épaisseur au moins égale à 50 µm, de préférence au moins égale à 150 µm.

Cette feuille 11 comporte un extrait issu de Piper nigrum, de préférence dans une proportion massique inférieure à 1 ppm. Le pouvoir allergisant du poivre participe avantageusement à la répulsion des rongeurs nuisibles.

Elle présente également une couleur opaque verte susceptible d'induire un stress chez les rongeurs.

Des tests ont permis de montrer les bons résultats obtenus avec cette feuille 11 de la présente invention par comparaison avec un film de référence réalisé par exemple en Ziploc®.

Lors de ces tests, des réservoirs de blé enveloppés soit avec cette feuille 11, soit avec le film de référence ont été mis en présence d'une population de souris en état de manque de nourriture (stress alimentaire).

Il a été constaté que la feuille 11 n'était pas attaquée même après plusieurs jours d'exposition, tandis que le film de référence était attaqué dès le premier jour par les souris pour accéder à la nourriture.

## Revendications

1. Procédé de lutte contre des rongeurs comprenant le recouvrement d'une surface avec au moins une feuille (11) susceptible d'empêcher l'intrusion desdits rougeurs afin de protéger une zone ou un objet sensible, ladite au moins une feuille (11) étant en un matériau polymère opaque et présentant une épaisseur supérieure ou égale à 50 µm, ladite feuille (11) contenant un extrait issu de Piper nigrum.

2. Procédé selon la revendication 1, **caractérisé en ce qu'**on réalise une lutte sélective en adaptant l'épaisseur de ladite au moins une feuille (11) en fonction d'une population de rongeurs cibles nuisibles, l'épaisseur de ladite au moins une feuille (11) étant supérieure pour une population de gros rongeurs par rapport à une population de petits rongeurs.

3. Procédé selon l'une quelconque des revendications 1 ou 2, **caractérisé en ce qu'**on choisit ladite au moins une feuille (11) d'une couleur opaque susceptible d'induire un stress chez lesdits rongeurs, ladite couleur opaque étant verte ou bleue.

4. Procédé selon l'une quelconque des revendications 1 à 3, **caractérisé en ce que** l'épaisseur de ladite feuille (11) est prise entre 150 µm et 300 µm.

5. Procédé selon l'une quelconque des revendications 1 à 4, **caractérisé en ce que** ladite au moins une feuille (11) est une feuille (11) opaque en polyoléfine et encore mieux, une feuille (11) opaque en polyéthylène.

6. Procédé selon l'une quelconque des revendications 1 à 5, **caractérisé en ce qu'**on recouvre une zone de sol pour protéger des fondations et/ou on recouvre la surface externe d'au moins un objet tel qu'une canalisation et/ou une palette, avec ladite au moins une feuille (11).

7. Procédé selon l'une quelconque des revendications 1 à 6, **caractérisé en ce qu'**on prend ladite au moins une feuille, étanche à la vapeur d'eau.

8. Feuille formant une barrière anti-intrusion pour la mise en œuvre du procédé selon l'une quelconque des revendications 1 à 7, ladite feuille étant en un matériau polymère opaque et présentant une épaisseur au moins égale à 50 µm **caractérisé en ce que** ladite feuille comporte un extrait issu de Piper nigrum.

9. Feuille selon la revendication 8, **caractérisée en ce qu'**elle comporte un extrait issu de Piper nigrum dans une proportion massique inférieure à 1 ppm.

10. Feuille selon la revendication 8 ou 9, **caractérisée en ce qu'**elle présente une couleur opaque susceptible d'induire un stress chez lesdits rongeurs, ladite couleur opaque étant verte ou bleue.

11. Feuille selon l'une quelconque des revendications 8 à 10, **caractérisée en ce qu'**elle est une feuille opaque en polyoléfine et encore mieux, une feuille opaque en polyéthylène.

12. Feuille selon l'une quelconque des revendications 8 à 11, **caractérisée en ce qu'**elle comporte sur sa surface externe une couche d'adhésif repositionnable, constituée d'une composition adhésive thermofusible.

13. Feuille selon l'une quelconque des revendications 8 à 12, **caractérisée en ce qu'**elle est étanche à la vapeur d'eau.

14. Feuille selon l'une quelconque des revendications 8 à 13, **caractérisée en ce que** ladite feuille est pleine.

## Patentansprüche

1. Verfahren zur Bekämpfung von Nagetieren, umfassend das Abdecken einer Oberfläche mit wenigstens einer Folie (11), die in der Lage ist, das Eindringen der Nagetiere zu verhindern, um einen empfindlichen Bereich oder Gegenstand zu schützen, wobei die wenigstens eine Folie (11) aus einem undurchsichtigen polymeren Material hergestellt ist und eine Dicke von größer gleich 50 um aufweist, wobei die Folie (11) einen Extrakt aus Piper nigrum enthält.

2. Verfahren nach Anspruch 1, **dadurch gekennzeichnet, dass** eine selektive Bekämpfung durch Anpassen der Dicke der wenigstens einen Folie (11) entsprechend einer Population von Zielnagetieren erreicht wird, wobei die Dicke der wenigstens einen Folie (11) für eine Population von großen Nagetieren größer ist als für eine Population von kleinen Nagetieren.

3. Verfahren nach einem der Ansprüche 1 oder 2, **dadurch gekennzeichnet, dass** die wenigstens eine Folie (11) derart gewählt wird, dass sie eine deckende Farbe aufweist, die dazu geeignet ist, Stress bei den Nagetieren hervorzurufen, wobei die deckende Farbe grün oder blau ist.

4. Verfahren nach einem der Ansprüche 1 bis 3, **dadurch gekennzeichnet, dass** die Dicke der Folie (11) zwischen 150 µm und 300 µm gewählt wird.

5. Verfahren nach einem der Ansprüche 1 bis 4, **dadurch gekennzeichnet, dass** die wenigstens eine Folie (11) eine undurchsichtige Polyolefinfolie (11) und bevorzugt eine undurchsichtige Polyethylenfolie (11) ist.

6. Verfahren nach einem der Ansprüche 1 bis 5, **dadurch gekennzeichnet, dass** ein Bodenbereich zum Schutz von Fundamenten und/oder die Außenfläche wenigstens eines Gegenstandes, wie z.B. eines Rohres und/oder einer Palette, mit der wenigstens einen Folie (11) abgedeckt wird.

7. Verfahren nach einem der Ansprüche 1 bis 6, **dadurch gekennzeichnet, dass** die wenigstens eine Folie wasserdampfdicht ist.

8. Folie, welche einen Schutz gegen Eindringen zur Durchführung des Verfahrens nach einem der Ansprüche 1 bis 7 bildet, wobei die Folie aus einem undurchsichtigen polymeren Material gefertigt ist und eine Dicke von wenigstens 50 µm aufweist, **dadurch gekennzeichnet, dass** die Folie einen Extrakt aus Piper nigrum umfasst.

9. Folie nach Anspruch 8, **dadurch gekennzeichnet, dass** diese einen Extrakt aus Piper nigrum mit einem Gewichtsanteil von kleiner 1 ppm umfasst.

10. Folie nach Anspruch 8 oder 9, **dadurch gekennzeichnet, dass** diese eine deckende Farbe aufweist, die dazu geeignet ist, Stress bei den Nagetieren hervorzurufen, wobei die deckende Farbe grün oder blau ist.

11. Folie nach einem der Ansprüche 8 bis 10, **dadurch gekennzeichnet, dass** dies eine undurchsichtige Folie aus Polyolefin und bevorzugt eine undurchsichtige Folie aus Polyethylen ist.

12. Folie nach einem der Ansprüche 8 bis 11, **dadurch gekennzeichnet, dass** diese auf ihrer Außenfläche eine Schicht aus einem repositionierbaren Klebstoff aufweist, der aus einer Heißschmelzklebstoffzusammensetzung besteht.

13. Folie nach einem der Ansprüche 8 bis 12, **dadurch gekennzeichnet, dass** diese wasserdampfdicht ist.

14. Folie nach einem der Ansprüche 8 bis 13, **dadurch gekennzeichnet, dass** die Folie gefüllt ist.

## Claims

1. Rodent control method comprising covering a surface with at least one sheet (11) likely to prevent the intrusion of said rodents in order to protect a sensitive area or object, said at least one sheet (11) being made of an opaque polymer material and having a thickness greater than or equal to 50 µm, said sheet (11) containing an extract derived from Piper nigrum.

2. Method according to claim 1, **characterised in that** a selective control is performed by adapting the thickness of said at least one sheet (11) depending on a population of target rodent pests, the thickness of said at least one sheet (11) being greater for a population of large rodents in relation to a population of small rodents.

3. Method according to any one of claims 1 or 2, **characterised in that** said at least one sheet (11) is chosen of an opaque colour likely to induce stress in said rodents, said opaque colour being green or blue.

4. Method according to any one of claims 1 to 3, **characterised in that** the thickness of said sheet (11) is taken between 150 µm and 300 µm.

5. Method according to any one of claims 1 to 4, **characterised in that** said at least one sheet (11) is an opaque sheet (11) made of polyolefin and better still, an opaque sheet (11) made of polyethylene.

6. Method according to any one of claims 1 to 5, **characterised in that** a ground area is covered to protect foundations and/or the outer surface of at least one object such as a pipe and/or a pallet is covered, with said at least one sheet (11).

7. Method according to any one of claims 1 to 6, **characterised in that** said at least one sheet is taken, impervious to water vapour.

8. Sheet forming an anti-intrusion barrier for the implementation of the method according to any one of claims 1 to 7, **characterised in that** said sheet is made of an opaque polymer material, said sheet having a thickness at least equal to 50 µm and including an extract derived from Piper nigrum.

9. Sheet according to claim 8, **characterised in that** it includes an extract derived from Piper nigrum in a mass proportion less than 1 ppm.

10. Sheet according to claim 8 or 9, **characterised in that** it has an opaque colour likely to induce stress in said rodents, said opaque colour being green or blue.

11. Sheet according to any one of claims 8 to 10, **characterised in that** it is an opaque sheet made of polyolefin and better still, an opaque sheet made of polyethylene.

12. Sheet according to any one of claims 8 to 11, **characterised in that** it includes on the outer surface thereof a repositionable adhesive layer, consisting of a hot-melt adhesive composition.

13. Sheet according to any one of claims 8 to 12, **characterised in that** it is impervious to water vapour.

14. Sheet according to any one of claims 8 to 13, **characterised in that** said sheet is solid.
